# EUROPEAN PATENT APPLICATION

(11) **EP 4 844 837 A1**
(43) Date of publication of application: **25.11.2026**
(21) Application number: 25909608.9
(22) Date of filing: 30.06.2025
(51) Int. Cl.: H01M 4/525, C01G 53/504, H01M 4/505, H01M 4/485

(54) **POSITIVE ELECTRODE ACTIVE MATERIAL AND PREPARATION METHOD THEREFOR, POSITIVE ELECTRODE SHEET, BATTERY, AND ELECTRIC DEVICE**

(30) Priority: 31.03.2025 CN 202510400083
(71) Applicant: Beijing Easpring Material Technology Co., Ltd., Beijing 100160 (CN)
(72) Inventor: HU, Yiseng, Fengtai District Beijing 100160 (CN); LI, Chengwei, Fengtai District Beijing 100160 (CN); ZHANG, Mingjun, Fengtai District Beijing 100160 (CN); LI, Shanshan, Fengtai District Beijing 100160 (CN); SONG, Shunlin, Fengtai District Beijing 100160 (CN); LIU, Yafei, Fengtai District Beijing 100160 (CN); CHEN, Yanbin, Fengtai District Beijing 100160 (CN)
(74) Representative: Nederlandsch Octrooibureau
(86) International application number: PCT/CN2025/106192
(87) International publication number: WO 2026/208032

(57) **Abstract**

Provided are a cathode active material and a method for preparing the same, a cathode plate, a battery, and an electrical device. A sub-grain size distribution of a (104) crystal plane of the cathode active material satisfies: 0<Ln10<500Å, 350Å<Ln50<750Å, and 700Å<Ln90<1300Å. Ln₁₀ represents a sub-grain size corresponding to a cumulative volume percentage of 10% in a volume distribution of a sub-grain size Ln of the (104) crystal plane of the cathode active material. Ln₅₀ represents a sub-grain size corresponding to a cumulative volume percentage of 50% in the volume distribution of the sub-grain size Ln of the (104) crystal plane of the cathode active material. Ln₉₀ represents a sub-grain size corresponding to a cumulative volume percentage of 90% in the volume distribution of the sub-grain size Ln of the (104) crystal plane of the cathode active material.

## Description

### CROSS-REFERENCE TO RELATED APPLICATION

This application claims priority to and benefits of Chinese patent application No. 202510400083.1, filed with China National Intellectual Property Administration on March 31, 2025, the entire contents of which are incorporated herein by reference.

### FIELD

The present disclosure relates to the field of a battery, and particularly, to a cathode active material and a method for preparing the same, a cathode plate, a battery, and an electrical device.

### BACKGROUND

Nickel-cobalt-manganese cathode active material is very popular due to its excellent electrochemical performances. During charging-discharging process, since lithium ions may frequently intercalate into and de-intercalate from a cathode and an anode, the material is likely changed in term of its structure. Especially under high or low temperature conditions, the cathode active material may subject to intensified these structural changes, thereby causing a deterioration in electrical performances.

### SUMMARY

The present disclosure solves at least one of the technical problems in the related art to some extent.

In a first aspect, the present disclosure provides a cathode active material. A sub-grain size distribution of a (104) crystal plane of the cathode active material satisfies: 0<Ln10<500Å, 350Å<Ln50<750Å, and 700Å<Ln90<1300Å, where: Ln₁₀ represents a sub-grain size corresponding to a cumulative volume percentage of 10% in a volume distribution of a sub-grain size Ln of the (104) crystal plane of the cathode active material; Ln₅₀ represents a sub-grain size corresponding to a cumulative volume percentage of 50% in the volume distribution of the sub-grain size Ln of the (104) crystal plane of the cathode active material; and Ln₉₀ represents a sub-grain size corresponding to a cumulative volume percentage of 90% in the volume distribution of the sub-grain size Ln of the (104) crystal plane of the cathode active material.

In the cathode active material provided by the present disclosure, by setting Ln₁₀, Ln_{50,} and Ln₉₀ of the cathode active material within the above ranges, on the one hand, a transport path of lithium ions can be shortened due to the relatively small sub-grain size, thereby improving kinetic performance of the cathode active material. On the other hand, the cathode active material can have improved crystallinity and structural stability, and the number of sub-grain boundaries in the cathode active material can be reduced and thus the influence on lithium ion transport can be lowered. In this way, the obtained cathode active material has both excellent kinetic performance and structural stability, and it is also improved in terms of performances at high or low temperature.

According to some embodiments of the present disclosure, 100Å≤Ln₁₀≤450Å, 400Å≤Ln₅₀≤700Å, and 800Å≤Ln₉₀≤1200Å. In this way, the kinetic performance and structural stability of the cathode active material can be enhanced, thereby improving performances at high or low temperature of a battery.

According to some embodiments of the present disclosure, Kn₉₀=(Ln₉₀-Ln₁₀)/Ln₅₀, and Kn₉₀≤1.8, and optionally, 0<Kn₉₀≤1.5. In this way, uniformity of particles of the cathode active material can be improved, and thus a transport rate of lithium ions can be raised, thereby enhancing the kinetic performance of the cathode active material.

According to some embodiments of the present disclosure, an average particle diameter P₅₀ of particles of the cathode active material satisfies 1 µm≤P₅₀≤2.5 µm, and optionally, 1.3µm≤P₅₀≤2µm. In this way, adhesion between the particles can be reduced, while the uniformity of diameters of the particles of the cathode active material can be improved.

According to some embodiments of the present disclosure, a volume-based median particle diameter Dv₅₀ of particles of the cathode active material satisfies 2 µm≤Dv₅₀≤4.5 µm, and optionally, 2.5 µm≤Dv₅₀≤4 µm. In this way, the transport path of lithium ions can be shortened, improving the kinetic performance of the cathode active material.

According to some embodiments of the present disclosure, 1≤Dv₅₀/P₅₀≤2.5, and optionally, 1.2≤Dv₅₀/P₅₀≤2.5. In this way, agglomeration between the particles of the cathode active material can be reduced.

According to some embodiments of the present disclosure, the cathode active material includes a compound represented by Formula I:

Li_{1±a}(NiₓCo_{y}Mn_{z}G_{b})M_{c}O₂ Formula I,

where: 0≤a≤0.1, 0≤b≤0.05, 0≤c≤0.05, 0.4≤x<1, 0<y<0.5, and 0≤z<0.5; G includes at least one of Zr, Ti, Y, W, Al, or Nb; and M includes at least one of La, Zr, B, Nb, Ti, W, Si, Mg, Al, or Co.

According to some embodiments of the present disclosure, 0<b≤0.05. In this way, the structural stability of the cathode active material can be enhanced by the doped element, improving the performance at high temperature of the battery.

According to some embodiments of the present disclosure, the cathode active material includes a matrix and a coating material located on at least part of a surface of the matrix. The coating material includes the element M. In this way, the structural stability of the cathode active material can be enhanced.

In a second aspect, the present disclosure provides a method for preparing the cathode active material according to the first aspect of the present disclosure. The method includes: mixing a nickel-cobalt-manganese precursor with a lithium source, to obtain a mixture; heating the mixture to a temperature in a first constant temperature section and holding the temperature, the first constant temperature section ranging from 600°C to 900°C; raising the temperature and performing a first sintering on the mixture, a temperature of the first sintering ranging from 800°C to 1000°C; lowering, subsequent to the first sintering, the temperature to a temperature in a second constant temperature section and holding the temperature, to obtain an in-process product, the second constant temperature section ranging from 300°C to 700°C; and performing a second sintering on the in-process product, to obtain the cathode active material, a temperature of the second sintering being lower than or equal to the temperature of the first sintering.

In the method for preparing the cathode active material provided by the present disclosure, a growth process of the sub-grain can be controlled by controlling the temperature in the first and second constant temperature sections, thereby controlling the sub-grain sizes Ln₁₀, Ln_{50,} and Ln₉₀ of the (104) crystal plane of the cathode active material. In this way, the structural stability of the cathode active material can be enhanced, and a transport distance of the lithium ions can be shortened, improving performances at high and low temperature of a battery.

According to some embodiments of the present disclosure, the method further includes: mixing the nickel-cobalt-manganese precursor, the lithium source, and an additive containing element G to obtain the mixture. In this way, the structural stability of the cathode active material can be enhanced by doping the element, improving the performance at high temperature of the battery.

According to some embodiments of the present disclosure, during the second sintering, the in-process product is mixed with a coating agent containing element M. In this way, the coating material can further enhance the structural stability of the cathode active material.

According to some embodiments of the present disclosure, the temperature of the second sintering ranges from 300°C to 800°C.

According to some embodiments of the present disclosure, the first sintering and the second sintering are each independently performed for 6 hours to 12 hours.

According to some embodiments of the present disclosure, the additive includes at least one of an oxide containing the element G, a hydroxide containing the element G, or a carbonate containing the element G.

In a third aspect, the present disclosure provides a cathode plate. The cathode plate includes the cathode active material according to the first aspect of the present disclosure or a cathode active material prepared by the method according to the second aspect of the present disclosure.

In a fourth aspect, the present disclosure provides a battery. The battery includes the cathode plate according to the third aspect of the present disclosure.

In a fifth aspect, the present disclosure provides an electrical device. The electrical device includes the battery according to the fourth aspect of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1 illustrates a schematic flowchart of a method for preparing a cathode active material according to an embodiment of the present disclosure.
FIG. 2 is an SEM image of a cathode active material prepared in Example 1 of the present disclosure.
FIG. 3 is an SEM image of a cathode active material prepared in Comparative Example 1 of the present disclosure.

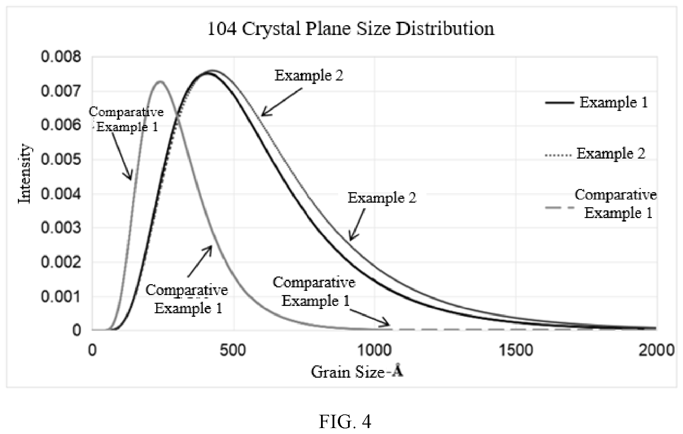

FIG. 4 is a diagram of a sub-grain size distribution of a (104) crystal plane of the cathode active material prepared in Example 1, Example 2, and Comparative Example 1 of the present disclosure.

### DETAILED DESCRIPTION

Embodiments of the present disclosure are described in detail below. The embodiments described below are illustrative and are intended to explain, rather than limiting, the present disclosure. The specific techniques or conditions, which are not specified in the embodiments, are those described in the literature in the art or in accordance with the manufacturers' instructions. Reagents and instruments without indicating the manufacturers thereof are conventional and commercially available products.

In a first aspect, the present disclosure provides a cathode active material. A sub-grain size distribution of a (104) crystal plane of the cathode active material satisfies: 0<Ln10<500Å, 350Å<Ln50<750Å, and 700Å<Ln90<1300Å, where: Ln₁₀ represents a sub-grain size corresponding to a cumulative volume percentage of 10% in a volume distribution of a sub-grain size Ln of the (104) crystal plane of the cathode active material; Ln₅₀ represents a sub-grain size corresponding to a cumulative volume percentage of 50% in the volume distribution of the sub-grain size Ln of the (104) crystal plane of the cathode active material; and Ln₉₀ represents a sub-grain size corresponding to a cumulative volume percentage of 90% in the volume distribution of the sub-grain size Ln of the (104) crystal plane of the cathode active material.

In the cathode active material provided by the present disclosure, by setting Ln₁₀, Ln_{50,} and Ln₉₀ of the cathode active material within the above ranges, on the one hand, a transport path of lithium ions can be shortened due to the relatively small sub-grain size, thereby improving kinetic performance of the cathode active material. On the other hand, the cathode active material can have improved crystallinity and structural stability, and the number of sub-grain boundaries in the cathode active material can be reduced and thus the influence on lithium ion transport can be lowered. In this way, the obtained cathode active material has both excellent kinetic performance and structural stability, and it is also improved in terms of performances at high or low temperature.

In the present disclosure, the sub-grain size Ln of the cathode active material is statistically calculated by fitting a powder X-ray diffraction pattern acquired via powder X-ray diffraction with CuKα radiation using the Fundamental Parameter algorithm.

By way of example, Ln₁₀ may be 100 Å, 200 Å, 300 Å, 400 Å, 490 Å, etc., or may be in a range defined by any two of the above values.

By way of example, Ln₅₀ may be 360 Å, 400 Å, 500 Å, 600 Å, 740 Å, etc., or may be in a range defined by any two of the above values.

By way of example, Ln₉₀ may be 710 Å, 800 Å, 900 Å, 1100 Å, 1290 Å, etc., or may be in a range defined by any two of the above values.

According to some embodiments of the present disclosure, 100Å≤Ln₁₀≤450Å, 400Å≤Ln₅₀≤700Å, and 800Å≤Ln₉₀≤1200Å. By setting Ln₁₀, Ln₅₀, and Ln₉₀ within the above ranges, the transport path of lithium ions can be shortened, the crystallinity and the structural stability of the cathode active material can be improved, thereby improving performances at high or low temperature of a battery.

According to some embodiments of the present disclosure, the cathode active material includes a compound represented by Formula I:

Li_{1±a}(NiₓCo_{y}Mn_{z}G_{b})M_{c}O₂ Formula I,

where: 0≤a≤0.1, 0≤b≤0.05, 0≤c≤0.05, 0.4≤x<1, 0<y<0.5, and 0≤z<0.5; G includes at least one of Zr, Ti, Y, W, Al, or Nb; and M includes at least one of La, Zr, B, Nb, Ti, W, Si, Mg, Al, or Co.

By way of example, a may be 0, 0.03, 0.06, 0.08, 0.1, etc., or may be in a range defined by any two of the above values.

By way of example, b may be 0, 0.01, 0.02, 0.03, 0.04, 0.05, etc., or may be in a range defined by any two of the above values.

According to some embodiments of the present disclosure, 0<b≤0.05. By doping the G element into the cathode active material, the structural stability of the cathode active material can be enhanced, improving the performance at high temperature of the battery.

By way of example, c may be 0.01, 0.02, 0.03, 0.04, 0.05, etc., or may be in a range defined by any two of the above values.

By way of example, x may be 0.4, 0.6, 0.8, 0.9, 0.95, etc., or may be in a range defined by any two of the above values.

By way of example, y may be 0.1, 0.2, 0.3, 0.4, 0.45, etc., or may be in a range defined by any two of the above values.

By way of example, z may be 0, 0.1, 0.2, 0.3, 0.4, 0.45, etc., or may be in a range defined by any two of the above values.

According to some embodiments of the present disclosure, the cathode active material includes a matrix and a coating material located on at least part of a surface of the matrix. The coating material includes the element M. In this way, the structural stability of the cathode active material can be enhanced.

According to some embodiments of the present disclosure, Kn₉₀=(Ln₉₀-Ln₁₀)/Ln₅₀, and Kn₉₀≤1.8. In the present disclosure, a value of Kn₉₀ can reflect uniformity of grain size distribution of the cathode active material. By setting Kn₉₀ within the above range, the sub-grain sizes of the (104) crystal plane of the cathode active material can be distributed in a more concentrated and uniform way, which can lower the influence on lithium ion transport.

By way of example, Kn₉₀ may be 0.3, 0.5, 0.9, 1.3, 1.5, 1.8, etc., or may be in a range defined by any two of the above values.

According to some specific embodiments of the present disclosure, 0<Kn₉₀≤1.5.

According to some embodiments of the present disclosure, an average particle diameter P₅₀ of particles of the cathode active material satisfies 1 µm≤P₅₀≤2.5 µm. By setting P₅₀ within the above range, on the one hand, the transport path of the lithium ions can be shortened, and thus the performance at low temperature of the battery can be improved. On the other hand, adhesion between the particles of the cathode active material can be reduced, which is conducive to the formation of single-crystal particles.

In the present disclosure, the average particle diameter P₅₀ can be obtained by: measuring projected areas of 500 particles using scanning electron microscopy (SEM), converting the projected areas into equivalent-area standard circles and measuring diameters of these circles, and calculating an average value of these diameters as the average particle diameter of the particles of the cathode active material.

By way of example, P₅₀ may be 1 µm, 1.3 µm, 1.7 µm, 2 µm, 2.3 µm, 2.5 µm, etc., or may be in a range defined by any two of the above values.

According to some specific embodiments of the present disclosure, 1.3 µm≤P₅₀≤2 µm.

According to some embodiments of the present disclosure, a volume-based median particle diameter Dv₅₀ of particles of the cathode active material satisfies 2 µm≤Dv₅₀≤4.5 µm. In this way, the transport path of lithium ions can be shortened, improving the performance at low temperature of the battery.

In the present disclosure, Dv₅₀ can be measured using a Mastersizer 3000 laser particle size analyzer from Malvern.

According to some specific embodiments of the present disclosure, 2.5 µm≤Dv₅₀≤4 µm.

According to some embodiments of the present disclosure, 1≤Dv₅₀/P₅₀≤2.5. By controlling the ratio Dv₅₀/P₅₀ within the above range, agglomeration of the cathode active material can be reduced. In this way, a risk of deteriorated cycling stability at high temperature of the battery, which is caused by more exposed interface newly formed with the dispersion of the agglomerated particles, can be lowered during battery cycling.

According to some specific embodiments of the present disclosure, 1.2≤Dv₅₀/P₅₀≤2.5.

In a second aspect, the present disclosure provides a method for preparing a nickel-cobalt-manganese cathode active material. The method includes: mixing a nickel-cobalt-manganese precursor with a lithium source, to obtain a mixture; heating the mixture to a temperature in a first constant temperature section and holding the temperature, the first constant temperature section ranging from 600°C to 900°C; raising the temperature and performing a first sintering on the mixture, a temperature of the first sintering ranging from 800°C to 1000°C; lowering, subsequent to the first sintering, the temperature to a temperature in a second constant temperature section and holding the temperature, to obtain an in-process product, the second constant temperature section ranging from 300°C to 700°C; and performing a second sintering on the in-process product, to obtain the cathode active material, a temperature of the second sintering being lower than or equal to the temperature of the first sintering.

In the method for preparing the cathode active material provided by the present disclosure, in the first constant temperature section, lithium salt is melted at a relatively low temperature and then penetrates into an interior of the precursor to allow sufficient contact of the raw materials, thereby forming uniform sub-grain seeds inside and outside the precursor. Subsequently, the temperature is raised to perform the first sintering, enabling the sub-grain seeds to grow into sub-grains. Then, the temperature is held in the second constant temperature section, which can perfect and repair a sub-grain defect and improve uniformity of sub-grains, thereby obtaining a cathode active material with controllable and uniform sub-grain size distribution. In this way, the obtained cathode active material has good structural stability and lithium ions have a short transport distance, which can enhance the kinetic performance and stability of the cathode active material, improving performances at high and low temperature of a battery.

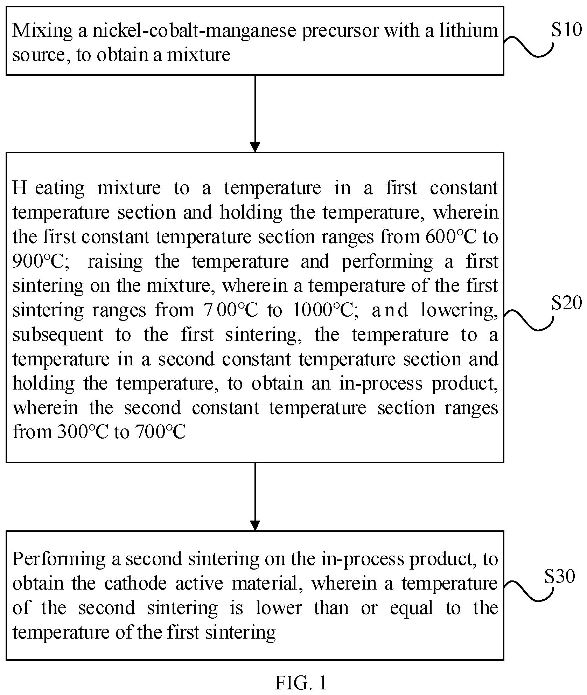

The method provided in the present disclosure is described in detail below. As illustrated in FIG. 1, the method includes the following operations.

At S10, a nickel-cobalt-manganese precursor is mixed with a lithium source, to obtain a mixture.

In this step, the nickel-cobalt-manganese precursor and the lithium source are mixed using a high-speed mixer to obtain a uniform mixture. A stirring speed of the high-speed mixer may range from 300 rpm to 500 rpm, and the stirring time of the high-speed mixer may range from 20 min to 40 min.

According to some embodiments of the present disclosure, the nickel-cobalt-manganese precursor and the lithium source may be mixed with an additive containing element G using the high-speed mixer.

According to some embodiments of the present disclosure, the additive includes at least one of an oxide containing the element G, a hydroxide containing the element G, or a carbonate containing the element G.

During sintering, the nickel-cobalt-manganese precursor grows under the action of the lithium salt to form single crystals. Upon addition of the additive containing element G, the element G can enter crystal lattices of the material and thus affect crystal orientation of the material. The sub-grain size of the additive in the present disclosure is similar to a sub-grain size of the cathode active material, and thus the structural stability of the cathode active material can be enhanced.

According to some embodiments of the present disclosure, the nickel-cobalt-manganese precursor includes at least one of a nickel-cobalt-manganese oxide or a nickel-cobalt-manganese hydroxide.

At S20, the mixture is heated to a temperature in a first constant temperature section and the temperature is held. The first constant temperature section ranges from 600°C to 900°C. The temperature is raised and a first sintering is performed on the mixture. A temperature of the first sintering ranges from 800°C to 1000°C. Subsequent to the first sintering, the temperature is lowered to a temperature in a second constant temperature section, and the temperature is held, to obtain an in-process product. The second constant temperature section ranges from 300°C to 700°C.

In this step, the mixture is heated in a kiln under an air or oxygen atmosphere. The interior of the kiln is maintained at a slight positive pressure of 0 Pa to 30 Pa. The temperature is raised to the temperature in the first constant temperature section at a rate of 1°C/min to 4°C/min. The first constant temperature section ranges from 600°C to 900°C, with heat preservation for 2 hours to 4 hours. Subsequently, the temperature is raised at the same heating rate for the first sintering. The temperature of the first sintering ranges from 800°C to 1000°C. Subsequent to the first sintering, the temperature is lowered to the temperature in the second constant temperature section. The temperature in the second constant temperature section ranges from 300°C to 700°C and is held for 2 hours to 4 hours. Thereafter, the temperature is lowered to a room temperature, and crushing is performed using an air jet mill. A rotation speed of a classifier wheel of the air jet mill ranges from 40 Hz to 50 Hz, to obtain the in-process product.

By way of example, the temperature in the first constant temperature section may be 600°C, 700°C, 800°C, 900°C, etc., or may be in a range defined by any two of the above values.

By way of example, the temperature of the first sintering may be 800°C, 900°C, 1000°C, etc., or may be in a range defined by any two of the above values.

According to some specific embodiments of the present disclosure, the temperature of the first sintering may range from 850°C to 980°C.

According to some embodiments of the present disclosure, the duration of the first sintering may range from 6 hours to 12 hours, for example, 6 hours, 8 hours, 10 hours, 12 hours, etc., or may be in a range defined by any two of the above values.

The temperature and duration of the first sintering within the above ranges are suitable for a reaction between the lithium salt and the precursor as well as for the formation of the cathode active material. By controlling the temperature and duration of the first sintering within the above ranges, single-crystal particles with good independence, roundness, and fullness can be formed. If the temperature is excessively low, the lithium salt may incompletely react or may not react with the precursor, and the obtained cathode active material may remain in an agglomerated state or in a quasi-single-crystal state, which cannot form complete single-crystal particles. The excessively high temperature may lead to an increase in the processing cost and the occurrence of over-sintering, thereby resulting in an excessively large average particle diameter.

By way of example, the temperature in the second constant temperature section may be 300°C, 400°C, 500°C, 600°C, 700°C, etc., or may be in a range defined by any two of the above values.

At S30, a second sintering is performed on the in-process product, to obtain the cathode active material. A temperature of the second sintering is lower than or equal to the temperature of the first sintering.

In this step, the in-process product is subjected to the second sintering under the air or oxygen atmosphere. The temperature of the second sintering is lower than or equal to that of the first sintering. The second sintering may be performed for 6 hours to 12 hours. Subsequent to the second sintering, the product is subjected to grinding with a colloid mill and sieving or directly sieved, to obtain a single-crystal cathode active material.

According to some embodiments of the present disclosure, this step further includes: mixing the in-process product with a coating agent containing element M using the high-speed mixer. The stirring speed may range from 300 rpm to 600 rpm and the stirring time may range from 20 min to 40 min.

In summary, the cathode active material and the method for preparing the cathode active material provided by the present disclosure have the following advantages.
(1) By additionally setting the first constant temperature section and the second constant temperature section during the preparation of the cathode active material, the sub-grain sizes Ln₁₀, Ln_{50,} and Ln₉₀ of the (104) crystal plane of the cathode active material can be controlled, enabling the preparation of a cathode material with uniform sub-grain size distribution. In this way, the structural stability of the cathode active material can be enhanced, and the transport distance of lithium ions can be shortened, thereby improving performances at high and low temperature of a battery.
(2) By controlling Dv₅₀, P_{50,} and Dv₅₀/P₅₀ of the cathode active material, the transport path of lithium ions can be further shortened, while the particle adhesion can be reduced. In this way, the material impedance can be reduced, and the kinetic performance and the performance at low temperature of the battery can be improved.
(3) By doping the cathode active material with the element G and/or forming a coating material containing element M on at least part of the surface of the matrix, the structural stability of the cathode active material can be enhanced, a probability of the occurrence of the cathode particle cracking can be reduced, and thus the performance at high temperature of the battery can be improved.

In a third aspect, the present disclosure provides a cathode plate. The cathode plate includes the cathode active material according to the first aspect of the present disclosure or a cathode active material prepared by the method according to the second aspect of the present disclosure.

The cathode plate includes a cathode current collector and a cathode active material layer disposed on at least one side of the cathode current collector. The cathode active material layer includes the cathode active material according to the first aspect of the present disclosure.

In a fourth aspect, the present disclosure provides a battery. The battery includes the cathode plate according to the third aspect of the present disclosure.

The battery may be a cylindrical battery, a prismatic battery, or a battery having any other shape. Classified by outer packaging, the battery may be a hard-case battery, a pouch battery, or the like.

Generally, the battery includes a cathode plate, an anode plate, an electrolyte, and a separator. The cathode plate, the anode plate, and the separator may be fabricated into an electrode assembly by winding or lamination. The electrode assembly and the electrolyte may be housed in the outer packaging. During charging and discharging of the battery, active ions are intercalated and deintercalated back and forth between the cathode plate and the anode plate. The electrolyte can conduct ions between the cathode plate and the anode plate. The separator is disposed between the cathode plate and the anode plate, mainly to prevent short-circuiting between a cathode and an anode while allowing the ions to pass through.

The cathode plate may include a cathode current collector and a cathode active material layer disposed on at least one surface of the cathode current collector. The cathode active material layer includes a cathode active material, a conductive agent, and a binder. The cathode current collector may include a metal foil. For example, an aluminum foil may be used as the metal foil. The cathode active material may include the cathode material according to the first aspect of the present disclosure or the cathode material prepared by the method according to the second aspect of the present disclosure. The conductive agent may include acetylene black, single-walled carbon nanotubes, and other conventional materials in the art. The binder may be polyvinylidene fluoride (PVDF) or other conventional materials in the art.

In some embodiments, the anode plate may include an anode current collector and an anode active material layer disposed on at least one surface of the anode current collector. The anode active material layer may include an anode active material, a thickener, a conductive agent, and a binder. The anode current collector may be the metal foil. For example, a copper foil may be used as the metal foil. The anode active material may include artificial graphite, natural graphite, silicon-containing carbon-based composites, lithium-containing metal composites, lithium metal materials, and other common anode active materials in the art. The thickener may be sodium carboxymethyl cellulose (CMC-Na) or other conventional materials in the art. The conductive agent may be acetylene black or other conventional materials in the art. The binder may be styrene-butadiene rubber or other conventional materials in the art.

In some embodiments, the separator may be any known separator well that is applicable to a lithium-ion battery and stable to the electrolyte used, such as a polyethylene separator, a polypropylene separator, a polyethylene/polypropylene composite separator, or the like.

In a fourth aspect, the present disclosure provides an electrical apparatus. The electrical apparatus includes the lithium-ion battery according to the third aspect of the present disclosure. The electrical apparatus has all the features and advantages of the lithium-ion battery described above, which will not be repeated here.

In a fifth aspect, the present disclosure provides an electrical device. The electrical device includes the battery according to the fourth aspect of the present disclosure.

The electrical device may include a mobile device (such as a mobile phone, a laptop computer, etc.), an electric vehicle (such as a pure electric vehicle, a hybrid electric vehicle, a plug-in hybrid electric vehicle, an electric bicycle, an electric scooter, an electric golf cart, an electric truck, etc.), an electric train, a ship, a satellite, an energy storage system, etc., but is not limited thereto.

Embodiments of the present disclosure are described in detail below. The embodiments described below are illustrative and are intended to explain, rather than limiting the present disclosure. Where no specific Techniques or conditions which are not specified in the embodiments are those described in the literature in the art or in accordance with the manufacturers' instructions. Reagents and instruments for which manufacturers are not specified are conventional products commercially available on the market.

### Example 1

### Preparation of Cathode Active Material

Lithium carbonate, a nickel-cobalt-manganese hydroxide precursor (Ni_{0.6}Co_{0.1}Mn_{0.3})(OH)₂, an additive ZrO₂ (in which G₁ element was Zr), and an additive Nb₂O₅ (in which G₂ element was Nb) were mixed using the high-speed mixer. n _{(Li)}: [n_{(Ni)}+ n_{(Co)}+ n_{(Mn)}]: n_{(G1)}: n_{(G2)}=1.04: 1: 0.003: 0.001. The high-speed mixer was operated at a speed of 400 rpm/min for a mixing time of 20 minutes.

The mixture was heated to 700°C at a heating rate of 2.7°C/min under an atmosphere with an oxygen content of 90% or higher, and then held at the temperature for 3 hours. Subsequent to the heat preservation, the temperature was raised to 970°C at the heating rate of 2.7°C/min, and a sintering was performed and maintained for 8 hours. Subsequently, the temperature was lowered to 500°C at a cooling rate of 2.7°C/min and held for 3 hours. After the heat treatment was completed, the sintered material was crushed using an air jet mill with a classifier wheel speed of 40 Hz to obtain an in-process product.

The in-process product was mixed with a coating agent Al₂O₃ (in which M₁ element was Al) and a coating agent Co₃O₄ (in which M₂ element was Co) using the high-speed mixer. The mixing was performed at a speed of 500 rpm/min for 30 minutes, with a molar ratio of [n_{(Ni)}+ n_{(Co)}+ n_{(Mn)}]: n_{(M1)}: n_{(M2)}=1:0.001:0.02. Then, a second sintering was performed in an air atmosphere at a temperature of 700°C for 9.5 hours. After the sintering was completed and the material was discharged, the sintered material was crushed using a colloid mill to obtain the cathode active material Li_{1.04}(Ni_{0.58537}Co_{0.11707}Mn_{0.29268}Zr_{0.00293}Nb_{0.00098})Al_{0.00098}O₂.

### Example 2

A preparation process of the cathode active material was substantially the same as that of Example 1, except the following aspects: the lithium salt was lithium hydroxide; the nickel-cobalt-manganese hydroxide precursor was (Ni_{0.8}Co_{0.1}Mn_{0.1})(OH)₂; a temperature of the first sintering was adjusted to 900°C and held for 7 hours; and a temperature of the second sintering was 650°C and held for 7 hours. A chemical formula of the prepared cathode active material was Li1.04(Ni0.78049Co0.11707Mn0.09756Zr0.00293Nb0.00098)Al0.00098O2.

### Example 3

The preparation process of the cathode active material was substantially the same as that of Example 1, except the following aspects: the temperature of the first sintering was 940°C; and the classifier speed of the air jet mill was adjusted to 45 Hz. A chemical formula of the prepared cathode active material was Li_{1.04}(Ni_{0.58537}Co_{0.11707}Mn_{0.29268}Zr_{0.00293}Nb_{0.00098})Al_{0.00098}O₂.

### Example 4

The preparation process of the cathode active material was substantially the same as that of Example 1, except the following aspects: the temperature of the first sintering was 940°C; the additive Nb₂O₅ was replaced with Y₂O₃ (in which G₂ element was Y); and the coating agent Al₂O₃ was replaced with B₂O₃ (in which M₁ element was B). A chemical formula of the prepared cathode active material was Li_{1.04}(Ni_{0.58537}Co_{0.11707}Mn_{0.29268}Zr_{0.00293}Y_{0.00098})B_{0.00098}O₂.

### Example 5

The preparation process of the cathode active material was substantially the same as that of Example 1, except that the temperature of the first sintering was 990°C. A chemical formula of the prepared cathode active material was Li_{1.04}(Ni_{0.58537}Co_{0.11707}Mn_{0.29268}Zr_{0.00293}Nb_{0.00098})Al_{0.00098}O₂.

### Example 6

The preparation process of the cathode active material was substantially the same as that of Example 1, except the following aspects: the temperature of the first sintering was 925°C and held for 10 h; and the classifier speed of the air jet mill was adjusted to 45 Hz. A chemical formula of the prepared cathode active material was Li_{1.04}(Ni_{0.58537}Co_{0.11707}Mn_{0.29268}Zr_{0.00293}Nb_{0.00098})Al_{0.00098}O₂.

### Example 7

The preparation process of the cathode active material was substantially the same as that of Example 1, except the following aspects: the temperature in the first constant temperature section was 650°C; and the temperature in the second constant temperature section was 350°C. A chemical formula of the prepared cathode active material was Li_{1.04}(Ni_{0.58537}Co_{0.11707}Mn_{0.29268}Zr_{0.00293}Nb_{0.00098})Al_{0.00098}O₂.

### Example 8

The preparation process of the cathode active material was substantially the same as that of Example 1, except the following aspects: the temperature of the first sintering was 920°C; and the classifier speed of the air jet mill was 45 Hz. A chemical formula of the prepared cathode active material was Li_{1.04}(Ni_{0.58537}Co_{0.11707}Mn_{0.29268}Zr_{0.00293}Nb_{0.00098})Al_{0.00098}O₂.

### Example 9

The preparation process of the cathode active material was substantially the same as that of Example 1, except the following aspects: the temperature of the first sintering was 900°C; and the classifier speed of the air jet mill was 45 Hz. A chemical formula of the prepared cathode active material was Li_{1.04}(Ni_{0.58537}Co_{0.11707}Mn_{0.29268}Zr_{0.00293}Nb_{0.00098})Al_{0.00098}O₂.

### Example 10

The preparation process of the cathode active material was substantially the same as that of Example 1, except the following aspects: the temperature in the first constant temperature section was 850°C; the temperature of the first sintering was 900°C; the temperature in the second constant temperature section was 600°C; and the classifier speed of the air jet mill was 45 Hz. A chemical formula of the prepared cathode active material was Li_{1.04}(Ni_{0.58537}Co_{0.11707}Mn_{0.29268}Zr_{0.00293}Nb_{0.00098})Al_{0.00098}O₂.

### Example 11

The preparation process of the cathode active material was substantially the same as that of Example 1, except that the classifier speed of the air jet mill was 35 Hz. A chemical formula of the prepared cathode active material was Li_{1.04}(Ni_{0.58537}Co_{0.11707}Mn_{0.29268}Zr_{0.00293}Nb_{0.00098})Al_{0.00098}O₂.

### Comparative Example 1

The preparation process of the cathode active material was substantially the same as that of Example 1, except that the temperature of the first sintering was 780°C. **Comparative Example 2**

The preparation process of the cathode active material was substantially the same as that of Example 1, except the following aspects: the temperature in the first constant temperature section was 300°C; the temperature of the first sintering was 900°C; the temperature of the second constant-temperature stage was 725°C; and the classifier speed of the air jet mill was 45 Hz.

### Comparative Example 3

The preparation process of the cathode active material was substantially the same as that of Example 1, except the following aspects: the temperature in the first constant temperature section was 945°C; and the temperature in the second constant temperature section was 245°C.

Detailed differences of Examples 1-11 and Comparative Examples 1-3 are shown in Table 1.

**[Table 1]**

| Item | Example 1 | Example 2 | Example 3 | Example 4 | Example 5 | Example 6 | Example 7 | Example 8 | Example 9 | Example 10 | Example 11 | Comparative Example 1 | Comparative Example 2 | Comparative Example 3 |
|---|---|---|---|---|---|---|---|---|---|---|---|---|---|---|
| Precursor Composition Ni:Co:Mn | 60:10:30 | 80:10:10 | 60:10:30 | 60:10:30 | 60:10:30 | 60:10:30 | 60:10:30 | 60:10:30 | 60:10:30 | 60:10:30 | 60:10:30 | 60:10:30 | 60:10:30 | 60:10:30 |
| Lihium Salt | Lithium Carbonate | Lithium Hydroxide | Lithium Carbonate | Lithium Carbonate | Lithium Carbonate | Lithium Carbonate | Lithium Carbonate | Lithium Carbonate | Lithium Carbonate | Lithium Carbonate, | Lithium Carbonate | Lithium Carbonate | Lithium Carbonate | Lithium Carbonate |
| Additive Containing Element G₂ | Nb₂O₅ | Nb₂O₅ | Nb₂O₅ | Y₂O₃ | Nb₂O₅ | Nb₂O₅ | Nb₂O₅ | Nb₂O₅ | Nb₂O₅ | Nb₂O₅ | Nb₂O₅ | Nb₂O₅ | Nb₂O₅ | Nb₂O₅ |
| Temperature of First Constant Temperature Section /°C | 700 | 700 | 700 | 700 | 700 | 700 | 650 | 700 | 700 | 850 | 700 | 700 | 300 | 945 |
| Temperature of First Sintering /°C | 970 | 900 | 940 | 940 | 990 | 925 | 970 | 920 | 900 | 900 | 970 | 780 | 900 | 970 |
| Duration of First Sintering /h | 8 | 7 | 8 | 8 | 8 | 10 | 8 | 8 | 8 | 8 | 8 | 8 | 8 | 8 |
| Temperature of Second Constant Temperature Section /°C | 500 | 500 | 500 | 500 | 500 | 500 | 350 | 500 | 500 | 600 | 500 | 500 | 725 | 245 |
| Coating Agent Containing Element M₁ | Al₂O₃ | Al₂O₃ | Al₂O₃ | B₂O₃ | Al₂O₃ | Al₂O₃ | Al₂O₃ | Al₂O₃ | Al₂O₃ | Al₂O₃ | Al₂O₃ | Al₂O₃ | Al₂O₃ | Al₂O₃ |
| Temperature of Second Sintering /°C | 700 | 650 | 700 | 700 | 700 | 700 | 700 | 700 | 700 | 700 | 700 | 700 | 700 | 700 |
| Duration of Second Sintering /h | 9.5 | 7 | 9.5 | 9.5 | 9.5 | 9.5 | 9.5 | 9.5 | 9.5 | 9.5 | 9.5 | 9.5 | 9.5 | 9.5 |
| Air Jet Mill Classification / Hz | 40 | 40 | 45 | 40 | 40 | 45 | 40 | 45 | 45 | 45 | 35 | 45 | 45 | 40 |

### Performance Testing

### 1. Volume-based Median Particle Diameter (Dv₅₀)

The volume-based median particle diameter (Dv₅₀) was measured using the Mastersizer 3000 laser particle size analyzer from Malvern.

### 2. Average Particle Diameter (P₅₀)

The average particle diameter (P₅₀) was measured using an S-4800 scanning electron microscope from HITACHI, Japan. A projected area of respective single-crystal particles in the electron microscope image was statistically counted to calculated the particle size. Specifically, the projected areas of 500 randomly selected particles in the scanning electron microscope image were converted into equivalent-area standard circles to calculate an average diameter of these equivalent-area standard circles, which was taken as an average particle diameter (P₅₀) of a single-crystal ternary nickel-cobalt-manganese cathode active material.

### 3. Ln₁₀, Ln₅₀, Ln₉₀

These parameters were measured using a Rigaku Smartlab 9KW rotating anode diffractometer, in a range of 10° to 80°, with a voltage of 40 kV, a current of 200 mA, a step size of 0.02°, and a scanning time of 2°/min. Test results were subjected to grain size statistical calculation using a WPPF grain size distribution function of a SmartLab Studio II software according to a Fundamental Parameter method (FP method).

### 4. Capacity Testing

Electrochemical performance of a CR2025 button cell was tested using a Shenzhen Neware battery testing system. A charge-discharge voltage was controlled at a range from 3.0 V to 4.4 V. At a room temperature, the button cell was subjected to a charge-discharge testing at 0.1 C to evaluate a charge-discharge specific capacity of the single-crystal ternary nickel-cobalt-manganese cathode material.

### 5. Cycle Capacity Retention Rate at High Temperature

In the Examples and Comparative Examples, the charge-discharge voltage was controlled at a range from 3.0 V to 4.4 V. At a constant temperature of 60°C, the button cell was charged and discharged for 2 cycles at 0.1 C, and then charged and discharged for 80 cycles at 1 C, to evaluate the cycle capacity retention rate at a high temperature of the single-crystal nickel-cobalt-manganese ternary cathode material.

### 6. Test for Performance at Low Temperature (all lithium-ion batteries were test at a test voltage ranging from 3.0 V to 4.4 V)

10% SOC-DCR test at a temperature of -10°C was performed by activating the button cell by charging and discharging at 1 C for 1 week at 25°C, charging the button cell at 1 C to 10% SOC, transferring the button cell to a box at a constant temperature of -10°C for 2 hours, and then discharging the button cell at a current of 1 C for 20s. The 10% SOC-DCR at a temperature of -10°C was calculated based on: (voltage at the last second of a standing step - voltage after 20 s of discharging)/a discharge current.

20% SOC-DCR test at a temperature of -10°C was performed by activating the button cell by charging and discharging at 1 C for 1 week at 25°C, charging the button cell at 1 C to 20% SOC, transferring the button cell to a box at a constant temperature of -10°C for 2 hours, and then discharging the button cell at a current of 1 C for 20. The 20% SOC-DCR at a temperature of -10°C was calculated based on: (voltage at the last second of a standing step - voltage after 20s of discharging)/a discharge current.

Test results of the cathode active materials and the batteries in Examples 1 to 11 and Comparative Examples 1 to 3 are shown in Table 2.

**[Table 2]**

| Item | Dv₅₀ (µm) | Average particle diameter P₅₀ (µm) | Dv₅₀/P₅₀ | Ln₁₀ (Å) | Ln₅₀ (Å) | Ln₅₀ (Å) | Kn₉₀ | 0.1C Capacity (mAh/g) | Capacity Retention Rate at High Temperature (%) | 10% S0C-DCR at Low Temperature (Ω) | 20% S0C-DCR at Low Temperature (Ω) |
|---|---|---|---|---|---|---|---|---|---|---|---|
| Example 1 | 3.64 | 1.88 | 1.94 | 221 | 521 | 871 | 1.25 | 201.8 | 95.2 | 99 | 144.2 |
| Example 2 | 3.63 | 1.91 | 1.90 | 287 | 551 | 1005 | 1.30 | 212.8 | 93.4 | 97 | 141.1 |
| Example 3 | 3.02 | 1.34 | 2.25 | 196 | 465 | 808 | 1.32 | 202.4 | 94.5 | 81.3 | 123.7 |
| Example 4 | 3.57 | 1.84 | 1.94 | 217 | 500 | 898 | 1.36 | 201.3 | 94.7 | 117 | 147.5 |
| Example 5 | 3.64 | 2.41 | 1.51 | 366 | 720 | 1272 | 1.26 | 198.4 | 93.2 | 168.3 | 240.7 |
| Example 6 | 3.07 | 1.26 | 2.44 | 141 | 395 | 727 | 1.48 | 199.3 | 92.1 | 143.5 | 194.3 |
| Example 7 | 3.61 | 1.93 | 1.87 | 97 | 509 | 1003 | 1.78 | 199.1 | 91.9 | 152.3 | 228.9 |
| Example 8 | 2.93 | 1.25 | 2.34 | 92 | 422 | 795 | 1.67 | 200.0 | 93.3 | 142.4 | 200.2 |
| Example 9 | 3.04 | 1.13 | 2.69 | 83 | 378 | 821 | 1.95 | 200.3 | 92.4 | 133.1 | 190.4 |
| Example 10 | 3.01 | 1.14 | 2.64 | 87 | 385 | 774 | 1.78 | 200.8 | 91.9 | 127.7 | 181.1 |
| Example 11 | 4.32 | 1.89 | 2.29 | 217 | 523 | 934 | 1.37 | 200.2 | 90.1 | 123.1 | 176.6 |
| Comparative Example 1 | 3.03 | 0.64 | 4.73 | 81 | 334 | 689 | 1.82 | 198.9 | 87.7 | 186.6 | 275.3 |
| Comparative Example 2 | 3.03 | 1.31 | 2.31 | 94 | 412 | 1374 | 3.11 | 198.5 | 88.4 | 194.5 | 245.1 |
| Comparative Example 3 | 3.64 | 1.89 | 1.93 | 108 | 517 | 1324 | 2.35 | 196.2 | 891 | 201.9 | 275.2 |

It can be seen from a comparison between Examples 1 to 11 and Comparative Examples 1 to 3 that the battery provided by the present disclosure has excellent performances at both high and low temperature. Such results indicate that, by controlling Ln₁₀, Ln₅₀, and Ln₉₀ of the cathode active material, a smaller sub-grain size can shorten the transport path of lithium ions and enhance the kinetic performance of the cathode active material. In addition, the crystallinity and the structural stability of the cathode active material can also be improved.

By comparing Examples 1 to 4 with Examples 5 to 11, it can be known that, when Ln₁₀, Ln₅₀, and Ln₉₀ of the prepared cathode active materials fall within the preferred ranges of the present disclosure, by adjusting a sintering process of the cathode active material, the performances at high and low temperature of a battery can be improved, indicating that the kinetic performance and the structural stability of the cathode active material can be improved.

By comparing Example 1 with Example 5, Example 1 has a smaller average particle diameter P₅₀ as well as smaller Ln₅₀ and Ln₉₀ than Example 5. Accordingly, Example 1 has a better lithium ion transport capability and a higher capacity than Example 5.

By comparing Example 1 with Example 6, it can be known that, when the average particle diameter P₅₀, Ln₅₀, and Ln₉₀ are within the preferred ranges of the present disclosure, a transport rate of lithium ions can be further enhanced, and a contact area between the cathode active material and the electrolyte can be reduced, thereby reducing the side reactions and improving cycling stability at high temperature of the battery.

By comparing Example 1 with Example 7, the cathode active material in Example 1 has a more concentrated sub-grain size distribution with a smaller difference in a sub-grain size than that in Example 7, which can enhance the structural stability of the cathode active material and improve the cycling stability at high temperature of the battery.

The comparison between Example 1 and Example 11 indicates that, a stronger crushing intensity for crushing the cathode active material can lower the Dv₅₀ of the cathode active material and reduce the adhesion between particles, thereby reducing the exposed interface generated during battery cycling and thus improving battery performance.

Comparative Example 1 reveals that an excessively low first sintering temperature will lead to a failure of the formation of single crystal particles, such that the material will remain in the quasi-single crystal state. Additionally, the average particle diameter, Ln₅₀, and Ln₉₀ of the material in Comparative Example 1 are all excessively small, and thus electrochemical performance thereof cannot be fully exerted.

Comparative Example 2 reveals that, if the temperature in the first constant temperature section is excessively low, the lithium salt may not melt to form sub-grain seeds. That is, the lithium salt will directly enter the next stage of sub-grain seed growth, resulting in poor uniformity of sub-grain size distribution of the material.

Comparative Example 3 indicates that if the temperature in the second constant temperature section is excessively low, the sub-grain defect cannot be repaired, leading to poor uniformity of sub-grain distribution and thus deterioration of electrochemical performance.

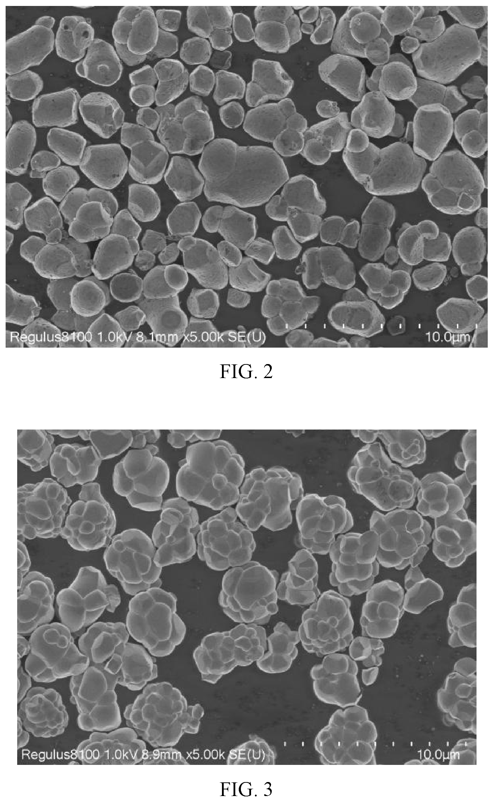

Fig. 1 to Fig. 3 reveal that the excessively low first sintering temperature in Comparative Example 1 may result in an average particle diameter P₅₀ lower than 1 and a smaller sub-grain size. Thus, the cathode material particles will retain characteristics of the precursor, rather than forming the single crystal morphology, and thus it can hardly exert the capacity thereof. In the meantime, due to the relatively great Kn₉₀, the sub-grain size distribution is uneven, resulting in a poor structural stability and thus a poor high-temperature cycle retention rate.

In the present disclosure, the description with reference to the terms "one embodiment," "some embodiments," "an example," "a specific example," or "some examples," etc., means that specific features, structures, materials, or characteristics described in conjunction with the embodiment(s) or example(s) are included in at least one embodiment or example of the present disclosure. In the present disclosure, any illustrative reference of the above terms does not necessarily refer to the same embodiment(s) or example(s). Further, the particular features, structures, materials, or characteristics may be combined in any suitable manner in any one or more embodiments or examples. In addition, different embodiments or examples and features of different embodiments or examples described in the specification may be combined by those skilled in the art without mutual contradiction.

Although the embodiments of the present disclosure have been shown and described above, it should be understood that the above-mentioned embodiments are exemplary and should not be construed as limiting the present disclosure. Those skilled in the art can make changes, modifications, substitutions, and alternations to the above-mentioned embodiments within the scope of the present disclosure.

## Claims

1. A cathode active material, wherein a sub-grain size distribution of a (104) crystal plane of the cathode active material satisfies:
0<Ln₁₀<500Å, 350Å<Ln₅₀<750Å, and 700Å<Ln₉₀<1300Å, wherein:
Ln₁₀ represents a sub-grain size corresponding to a cumulative volume percentage of 10% in a volume distribution of a sub-grain size Ln of the (104) crystal plane of the cathode active material;
Ln₅₀ represents a sub-grain size corresponding to a cumulative volume percentage of 50% in the volume distribution of the sub-grain size Ln of the (104) crystal plane of the cathode active material; and
Ln₉₀ represents a sub-grain size corresponding to a cumulative volume percentage of 90% in the volume distribution of the sub-grain size Ln of the (104) crystal plane of the cathode active material.

2. The cathode active material according to claim 1, wherein 100Å≤Ln₁₀≤450Å, 400Å≤Ln₅₀≤700Å, and 800Å≤Ln₉₀≤1200Å.

3. The cathode active material according to claim 1 or 2, wherein Kn₉₀=(Ln₉₀-Ln₁₀)/Ln₅₀, and Kn₉₀≤1.8.

4. The cathode active material according to any one of claims 1 to 3, wherein Kn₉₀=(Ln₉₀-Ln₁₀)/Ln₅₀, and 0<Kn₉₀≤1.5.

5. The cathode active material according to any one of claims 1 to 4, wherein an average particle diameter P₅₀ of particles of the cathode active material satisfies 1 µm≤P₅₀≤2.5 µm.

6. The cathode active material according to any one of claims 1 to 5, wherein an average particle diameter P₅₀ of particles of the cathode active material satisfies 1.3 µm≤P₅₀≤2 µm.

7. The cathode active material according to any one of claims 1 to 6, wherein a volume-based median particle diameter Dv₅₀ of particles of the cathode active material satisfies 2 µm≤Dv₅₀≤4.5 µm.

8. The cathode active material according to any one of claims 1 to 7, wherein a volume-based median particle diameter Dv₅₀ of particles of the cathode active material satisfies 2.5 µm≤Dv₅₀≤4 µm.

9. The cathode active material according to any one of claims 1 to 8, wherein 1≤Dv₅₀/P₅₀≤2.5.

10. The cathode active material according to any one of claims 1 to 9, wherein 1.2≤Dv₅₀/P₅₀≤2.5.

11. The cathode active material according to any one of claims 1 to 10, comprising a compound represented by Formula I:
Li_{1±a}(NiₓCo_{y}Mn_{z}G_{b})M_{c}O₂ Formula I
wherein:
0≤a≤0.1, 0≤b≤0.05, 0≤c≤0.05, 0.4≤x<1, 0<y<0.5, and 0≤z<0.5;
G comprises at least one of Zr, Ti, Y, W, Al, or Nb; and
M comprises at least one of La, Zr, B, Nb, Ti, W, Si, Mg, Al, or Co.

12. The cathode active material according to any one of claims 1 to 11, wherein 0<b≤0.05.

13. The cathode active material according to any one of claims 1 to 12, wherein the cathode active material comprises a matrix and a coating material located on at least part of a surface of the matrix, the coating material comprising the element M.

14. A method for preparing the cathode active material according to any one of claims 1 to 13, the method comprising:
mixing a nickel-cobalt-manganese precursor with a lithium source, to obtain a mixture;
heating the mixture to a temperature in a first constant temperature section and holding the temperature, wherein the first constant temperature section ranges from 600°C to 900°C;
raising the temperature and performing a first sintering on the mixture, wherein a temperature of the first sintering ranges from 800°C to 1000°C;
lowering, subsequent to the first sintering, the temperature to a temperature in a second constant temperature section and holding the temperature, to obtain an in-process product, wherein the second constant temperature section ranges from 300°C to 700°C; and
performing a second sintering on the in-process product, to obtain the cathode active material, wherein a temperature of the second sintering is lower than or equal to the temperature of the first sintering.

15. The method according to claim 14, further comprising:
mixing the nickel-cobalt-manganese precursor, the lithium source, and an additive containing element G, to obtain the mixture.

16. The method according to claim 14 or 15, wherein during the second sintering, the in-process product is mixed with a coating agent containing element M.

17. The method according to any one of claims 14 to 16, wherein the temperature of the second sintering ranges from 300°C to 800°C.

18. The method according to any one of claims 14 to 17, wherein the first sintering and the second sintering are each independently performed for 6 hours to 12 hours.

19. The method according to any one of claims 14 to 18, wherein the additive comprises at least one of an oxide containing the element G, a hydroxide containing the element G, or a carbonate containing the element G.

20. A cathode plate, comprising:
the cathode active material according to any one of claims 1 to 13; or
a cathode active material prepared by the method according to any one of claims 14 to 19.

21. A battery, comprising the cathode plate according to claim 20.

22. An electrical device, comprising the battery according to claim 21.
